# EUROPÄISCHE PATENTSCHRIFT

(11) **EP 1 417 386 B1**
(45) Veröffentlichungstag und Bekanntmachung des Hinweises auf die Patenterteilung: **14.12.2011**
(21) Anmeldenummer: 02794594.8
(22) Anmeldetag: 09.08.2002
(51) Int. Cl.: E04B 1/76, E04D 13/03, A01G 9/24, E06B 3/28, E06B 9/24, F24J 2/40

(54) **WÄRMEDÄMMELEMENT**
HEAT INSULATING ELEMENT
ELEMENT D'ISOLATION THERMIQUE

(30) Priorität: 11.08.2001 DE 10138376
(43) Veröffentlichungstag der Anmeldung: 12.05.2004
(60) Teilanmeldung: 04015454.4
(73) Patentinhaber: CENTROSOLAR Glas GmbH & Co. KG, 90768 Fürth (DE)
(72) Erfinder: REISINGER, Gerhard, 89257 Illertissen (DE); HOFMANN, Thomas, 90763 Fürth (DE)
(74) Vertreter: Tergau & Walkenhorst
(86) Internationale Anmeldenummer: PCT/EP2002/008949
(87) Internationale Veröffentlichungsnummer: WO 2003/014486

(56) Entgegenhaltungen:
- EP-A- 1 199 288
- DE-A- 4 240 616
- DE-A- 10 051 724
- DE-A- 19 828 231
- DE-A- 19 918 811
- US-A- 3 920 953
- US-A- 3 968 831
- US-A- 4 160 523
- US-A- 4 775 520
- US-A- 4 822 120
- US-A- 5 014 481
- GLAUBITT W ET AL: "HIGH TRANSMISSION FLOAT GLASS FOR SOLAR APPLICATIONS" GLASS SCIENCE AND TECHNOLOGY, DEUTSCHE GLASTECHNISCHE GESELLSCHAFT, DE, Bd. 73, Nr. 6, Juni 2000 (2000-06), Seiten 193-195, XP000936294 Freiburg ISSN: 0017-1085

## Beschreibung

Die Erfindung bezieht sich auf ein Eindeckfenster, das beispielsweise als Fensterelement in einem Gewächshaus, in einem Sonnenkollektor oder dergleichen vorgesehen sein kann.

Bei den Hüll- oder Außenflächen von Gebäuden oder umschlossenen Räumen kann, insbesondere im Hinblick auf Energieverluste, bei bedarfsweiser Beheizung des jeweiligen Gebäudes oder Raumes eine Wärmedämmung vorgesehen oder sogar erforderlich sein. Zu diesem Zweck werden die Hüll- oder Außenflächen von Gebäuden üblicherweise mit flächig ausgebildeten Wärmedämmelementen ausgestattet oder versehen, wobei die Wärmedämmelemente hinsichtlich der verwendeten Materialien und deren relativer Anordnung zueinander üblicherweise für einen vergleichsweise geringen Wärmeübergangswert (sogenannter "u-Wert") und somit für eine hohe Wärmeisolierungswirkung ausgelegt sind.

Derartige Wärmedämmelemente sind üblicherweise nach fest vorgegebenen Kriterien ausgeführt und weisen hinsichtlich der Richtung des Wärmestroms eine symmetrische Charakteristik auf. Ein Gindechfenchen enfsprechend dem Oberbegriff des Anspruch 1 ist aus DE 42 40 616 A1 bekannt. . Dies bedeutet, dass der Wärmeübergangswert bei einem einmal montierten Wärmedämmelement sowohl für einen Wärmestrom vom Innenraum des jeweiligen Gebäudes oder Raumes in dessen Außenraum als auch für einen Wärmestrom in umgekehrter Richtung, also vom Außenraum des jeweiligen Gebäudes oder Raumes in dessen Innenraum, gleich groß ist. Darüber hinaus ändert sich der Wärmeübergangswert üblicherweise auch bei wechselnden Umgebungsbedingungen nur unwesentlich. Je nach vorgesehenem Einsatzzweck oder-gebiet des Wärmedämmelements kann es jedoch wünschenswert sein, den Wärmeübergangswert des Wärmedämmelements auch nach dessen Einbau, beispielsweise in die Außenwand oder Außenhülle eines Gebäudes, noch modifizieren zu können, um somit eine an äußere, möglicherweise wechselnde Umstände angepasste Einstellung der Wärmeübertragungseigenschaften vornehmen zu können. Beispielsweise könnte es wünschenswert sein, bei vergleichsweisen kalten Außentemperaturen zur Vermeidung unnötig hoher Heiz- oder Betriebskosten eine vergleichsweise hohe Wärmeisolationswirkung durch Einstellung eines vergleichsweise niedrigen Wärmeübergangswerts sicherzustellen, wobei andererseits bei vergleichsweise hohen Außentemperaturen auf eine hohe Wärmeisolationswirkung verzichtet werden soll. Es kann daher wünschenswert sein, ein Wärmedämmelement hinsichtlich seiner Wärmeübertragungseigenschaften auch nach seinem Einbau variabel oder einstellbar auszugestalten.

Beispielsweise sind Gewächshäuser üblicherweise mit einer Anzahl von so genannten Eindeckfenstem versehen, die als Dach- oder Seitenwandfenster eingesetzt sind und in ihrer Gesamtheit die Außenhülle oder Hüllfläche des Gewächshauses bilden. Diese Eindeckfenster sollen ihrerseits auch wärmeisolierend und somit als Wärmedämmelemente ausgebildet sein. Bei Gewächshäusern ist die Einhaltung eines für die dort gezogenen Pflanzen günstigen Gesamtklimas und damit eines geeigneten Temperatumiveaus üblicherweise von besonderer Bedeutung. In diesem Zusammenhang ist eine hohe Wärmedämmisolierung der Eindeckfenster in der Regel nur bei Nacht und bei tiefen Außentemperaturen am Tag vorteilhaft. Bei schwacher Lichteinstrahlung, z.B. morgens oder abends, oder zum bedarfsweisen Abtauen von auf Dachfenstern liegendem Schnee, ist hingegen eine eher geringe Wärmedämmung zugunsten anderer Parameter, wie beispielsweise der Transparenz angestrebt. Gerade für die als Wärmedämmelement ausgebildeten Eindeckfenster von Gewächshäusern kann also ein einstellbarer oder veränderbarer Wärmeübergangswert besonders wünschenswert sein. Ähnliches gilt auch für Eindeckfenster in anderen technischen Einrichtungen, wie z.B. Sonnenkollektoren.

Herkömmliche Eindeckmaterialien für Gewächshäuser oder Sonnenkollektoren oder dergleichen genügen diesen Anforderungen nicht. Sowohl starre Eindeckmaterialien; wie Isolierglasscheiben, Stegdoppelplatten o.Ä., ebenso wie flexible Eindeckmaterialien wie beispielsweise dauerhaft gespannte Kunststofffolien bieten keine derartige Flexibilität. Bei Solarkollektoren kann eine hoch transparente, wärmedämmende Eindeckung zudem zu hohen Stagnationstemperaturen führen.

Der Erfindung liegt daher die Aufgabe zugrunde, ein Wärmedämmelement anzugeben, das bei vergleichsweise einfacher Bauweise in der Art einer schaltbaren Ausgestaltung beeinflussbare oder variierbare Wärmeübertragungseigenschaften aufweist. Des Weiteren soll ein unter Verwendung eines derartigen Wärmedämmelements besonders für einen Einsatz in Gewächshäusern oder Sonnenkollektoren geeignetes Eindeckfenster angegeben werden.

Diese Aufgabe wird erfindungsgemäß gelöst mit einer Grundplatte für das Wärmedämmelement, die mit einer Abdeckhülle überspannt ist, wobei die Abdeckhülle hinsichtlich ihrer mechanischen Flexibilität derart ausgewählt ist, dass das von der Grundplatte und der Abdeckhülle begrenzte, mit einem Gasdruck oder Gasunterdruck beaufschlagbare Innenvolumen über den Gasdruck veränderbar ist.

Die Erfindung geht dabei von der Überlegung aus, dass für eine hinsichtlich der Wärmeübertragungseigenschaften oder der Isolationseigenschaften des Wärmedämmelements schaltbare Ausgestaltung ein unmittelbar beeinflussbarer, die Wärmeübertragungseigenschaften des Wärmedämmelements insgesamt unmittelbar modifizierender Parameter oder Freiheitsgrad vorgesehen sein sollte. Um dies zu ermöglichen, umfasst das Wärmedämmelement eine Mehrzahl von in Wärmestromrichtung gesehen hintereinander angeordneten Bestandteilen oder Komponenten, nämlich die Grundplatte und die Abdeckhülle. Die Wärmeübertragungseigenschaften des aus diesen gebildeten Gesamtsystems oder Gesamtelements sind dabei gegeben durch die individuellen Wärmeübertragungseigenschaften der Grundplatte, die individuellen Wärmeübertragungseigenschaften der Abdeckhülle und auch die individuellen Wärmeübertragungseigenschaften des zwischen diese befindlichen Spaltbereichs oder Innenraums. Obwohl die individuellen Wärmeübertragungseigenschaften der Grundplatte als solcher sowie der Abdeckhülle als solcher herstellungsbedingt im Wesentlichen konstant und unveränderbar sind, ist eine gezielte Beeinflussung der Wärmeübertragungseigenschaften des Gesamtsystems durch diesen Aufbau durch eine Modifikation der Wärmeübertragungseigenschaften des Innenraums zwischen den beiden genannten Komponenten ermöglicht.

Unter gezielter Ausnutzung der Erkenntnis, dass ein luft- oder gasgefüllter Spalt oder Innenraum eine erhebliche Wärmeisolationswirkung aufweisen kann, die erheblich von der Spaltdicke abhängt, ist dabei eine gezielte Beeinflussbarkeit des jeweiligen Abstands der Abdeckhülle von der Grundplatte, die im Wesentlichen mit einer gezielten Beeinflussung des von der Grundplatte und der Abdeckhülle begrenzten Innenvolumens vergleichbar ist, vorgesehen. Um dies bei vergleichsweise einfacher Bauart zuverlässig zu ermöglichen, ist die Grundplatte vergleichsweise starr, mechanisch unflexibel und somit belastbar ausgebildet, so dass die Grundplatte die wesentlichen inneren Kräfte wie Spannkräfte aufnehmen kann, ohne dass äußere Unterstützungsmittel erforderlich wären. Im Vergleich dazu ist die Abdeckhülle, beispielsweise durch geeignete Materialwahl und/oder durch geeignete Dimensionierung, insbesondere hinsichtlich ihrer Dicke, derart ausgestaltet, dass sie über eine Variation des im Innenvolumen vor herrschenden Gasdrucks ausreichend verformbar ist, so dass sich in Abhängigkeit vom jeweils vorgegeben Gasdruck der lokale Abstand der Abdeckhülle zur Grundplatte entsprechend einstellt. Als Kriterium für eine besonders geeignete Auswahl hinsichtlich Material und dessen Dimensionierung, sowohl für die Grundplatte als auch für die Abdeckhülle, kommt insbesondere die Biegesteifigkeit der jeweiligen Komponenten in Betracht, die im Hinblick auf das vorgesehene Konzept geeignet ausgewählt wird.

Um dabei eine bedarfsgerechte, auch mehrfache Umschaltung der Wärmeübertragungseigenschaften des Wärmedämmelements zu ermöglichen, sollte die über eine Veränderung des Gasdrucks erreichbare Veränderung des Innenvolumens zwischen Grundplatte und Abdeckhülle in dem Sinne reversibel ausgestaltet sein, dass auch bei alternierender Vergrößerung und Verkleinerung des Gasdrucks im Innenvolumen eine entsprechende Vergrößerung bzw. Verkleinerung des Innenvolumens eintritt. Vorteilhafterweise sind die Abdeckhülle und die Grundplatte hinsichtlich ihrer Materialeigenschaften, insbesondere ihrer Biegesteifigkeit, hierzu geeignet gewählt.

Darüber hinaus kann das Wärmedämmelement hinsichtlich seiner Wärmeübertragungseigenschaften sowohl im aktiven als auch im passiven Sinne schaltbar ausgebildet sein. Im aktiven Sinne schaltbar ist das Wärmedämmelement dabei, indem durch geeignete aktive Maßnahmen, wie beispielsweise eine gezielte Veränderung des Gasdrucks im Innenvolumen, eine entsprechende Veränderung des Innenvolumens und somit eine entsprechende Veränderung der Wärmeübertragungseigenschaften eingestellt wird. Eine passive Schaltbarkeit kann darüber hinaus aber auch erreicht werden, indem die Abdeckhülle auch auf äußere Umgebungseigenschaften, wie beispielsweise eine lokale mechanische Belastung, insbesondere eine Beaufschlagung mit Schneelasten, mechanisch flexibel reagiert und dabei das Innenvolumen zur Grundplatte hin entsprechend verkleinert. Durch eine derartige, durch eine geeignete Materialwahl oder Dimensionierung der Abdeckhülle erreichbare passive Schaltbarkeit kann das Wärmedämmelement beispielsweise derart ausgestaltet sein, dass bei auftretender mechanischer Belastung durch aufliegenden Schnee selbsttätig eine Verringerung der Isolationswirkung des Wärmedämmelements durch Verringerung des Innenvolumens eintritt, so dass über eine auf der Innenseite der Grundplatte vorhandene Beheizung ein Wärmeeintrag in die Schneelasten und somit ein Abschmelzen des Schnees erfolgt.

Eine derartige passive Schaltbarkeit ist besonders beim Einsatz des Wärmedämmelements in der Außenhülle eines Gewächshauses von Vorteil. Bei großflächigen Gewächshäusern, die mit wärmegedämmter Dacheindeckung ausgestaltet sind, ist das mögliche Abheizen von Schnee nämlich von besonderer Bedeutung. Für wärmegedämmte Eindeckungen von Gewächshäusern sind nämlich vergleichsweise hohe Innenraumtemperaturen im Gewächshaus erforderlich, um aufliegenden Schnee abschmelzen zu können. Eine derart erhöhte Innenraumtemperatur kann jedoch für die kultivierten Pflanzen sehr nachteilig sein, zumal diese bei aufliegendem Schnee auch noch unter Lichtmangel leiden. Durch die passive Schaltbarkeit können diese Nachteile zumindest vermindert werden.

Für eine besonders einfache Bauweise sind die Grundplatte und die Abdeckhülle des Wärmedämmelements vorteilhafterweise in einem gemeinsamen Halterahmen gehaltert, über den oder in dem sie gasdicht miteinander verbunden sind. Die gasdichte Verbindung von Grundplatte und Abdeckhülle, die insbesondere in deren Randbereichen umlaufend vorgesehen ist, ermöglicht dabei in besonderem Maße eine gezielte und reproduzierbare Einstellung des Gasdrucks im Innenvolumen.

Die Grundplatte ist in besonders vorteilhafter Ausgestaltung in dem Sinne als starres Bauelement ausgeführt, dass sie in der Art einer selbsttragenden Bauweise sämtliche inneren Kräfte des Wärmedämmelements geeignet aufnimmt, so dass eine zusätzliche Unterstützung durch äußere Elemente oder Tragvorrichtungen nicht weiter erforderlich ist. In Ergänzung zu dieser starren Bauweise der Grundplatte kann auch die Abdeckhülle im Wesentlichen als vergleichsweise starre Platte ausgeführt sein, wobei eine ausreichende Verformbarkeit der Abdeckhülle in Abhängigkeit vom im Innenvolumen herrschenden Gasdruck insbesondere durch geeignete Dimensionierung, also beispielsweise durch eine vergleichsweise geringe Dicke bei vergleichsweise großer lateraler Ausdehnung, erreicht werden kann. In besonders vorteilhafter Ausgestaltung ist in Ergänzung zur im Wesentlichen starr ausgeführten Grundplatte jedoch eine vergleichsweise hoch flexible Deckfolie als Abdeckhülle vorgesehen. Gerade durch eine derartige Kombination einer starren Grundplatte mit einer flexiblen Deckfolie, bei der sich die Deckfolie und die Grundplatte wesentlich in ihrer mechanischen Festigkeit und insbesondere in ihrer Biegesteifigkeit voneinander unterscheiden, ist eine besonders bedarfsgerechte Anpassung der baulichen Eigenschaften des Wärmedämmelements an äußere Vorgaben ermöglicht, die auch nicht durch die nunmehr erreichte Flexibilität bei der Einstellung der Wärmeübergangseigenschaften beeinträchtigt wird. Dabei kann nämlich die Grundplatte hinsichtlich ihrer Tragfähigkeit und hinsichtlich ihrer sonstigen mechanischen Eigenschaften an den vorgesehen Einsatzzweck angepasst sein, wobei die vergleichsweise flexible Deckfolie keinen oder nur geringen Anpassungsbedarf hinsichtlich der mechanischen Eigenschaften an die vorgesehene Einsatzumgebung bedingt.

Gerade bei einer derartigen Kombination einer vergleichsweise starren Grundplatte mit einer flexiblen Deckfolie ist die Grundplatte vorteilhafterweise hinsichtlich ihrer Materialwahl und hinsichtlich ihrer Dimensionierung derart ausgebildet, dass sie die Spannkräfte der darüber gespannten Deckfolie vollständig aufnimmt. Somit ist eine zuverlässige Ausnutzung der Wärmeübertragungseigenschaften der Deckfolie in Kombination mit der Grundplatte ermöglicht, ohne dass ein Rückgriff auf äußere Hilfsmittel, wie beispielsweise Spannmittel für die Deckfolie, erforderlich wäre.

Das Wärmedämmelement kann insbesondere für einen Einsatz unter verschiedenartigen Betriebsbedingungen oder Anforderungen geeignet ausgebildet sein. Eine besonders flexible Anpassung der Wärmeübertragungseigenschaften des Wärmedämmelements ist dabei ermöglicht, indem betriebsartabhängig oder bedarfsabhängig eine angepasste Befüllung des Innenvolumens mit spezifisch ausgewähltem Druckgas ermöglicht ist. Dazu ist das Innenvolumen des Wärmedämmelements in besonders vorteilhafter Ausgestaltung über eine absperrbare Gasleitung mit einer Anzahl von Druckgasspeichem verbunden. Das Druckgas kann dabei im Hinblick auf vorgegebene Erfordernisse spezifisch gewählt sein. Beispielsweise kann als Druckgas Kohlendioxid (CO₂) vorgesehen sein, das auch aufgrund seiner optischen Eigenschaften und im Hinblick auf einen möglicherweise erzielbaren Treibhauseffekt die Wärmeübertragungseigenschaften des Gesamtsystems vergleichsweise stark verändern kann. Alternativ oder zusätzlich kann als Druckgas auch ein Gas oder Gasflüssigkeitsgemisch mit verminderter Transparenz (z.B. disco fog) eingesetzt werden. Bei dieser Beaufschlagung des Innenvolumens erfolgt ein bedarfsweises Einblasen von Nebel, insbesondere auch um die optische Transparenz des Wärmedämmelements insgesamt zu verändern.

Um im Bedarfsfall auch einen vergleichsweise hohen Wärmeübertragungskoeffizienten des Wärmedämmelements einstellen zu können, ist dieses vorteilhafterweise auch für einen Betriebszustand geeignet, indem die Abdeckhülle flächig an der Grundplatte anliegt, so dass das Innenvolumen - abgesehen von möglichen Restvolumina in den Randbereichen - vollständig auf Null reduziert ist. In diesem Fall trägt das Innenvolumen nicht mehr zur Wärmeisolation bei, so dass ein vergleichsweiser hoher Wärmeübertragungskoeffizient des Wärmedämmelements insgesamt einstellbar ist. Um dies zu ermöglichen, ist das Innenvolumen des Wärmedämmelements vorteilhafterweise an eine absperrbare Entlüftungsleitung angeschlossen und in zusätzlicher oder alternativer vorteilhafter Weiterbildung über eine absperrbare Absaugleitung mit einem Unterdrucksystem verbunden. Gerade durch diese Ausgestaltung ist das Innenvolumen auch vollständig von darin befindlichen Gasen entleerbar, so dass gerade hierdurch in Verbindung mit einer Mehrzahl von alternativ vorgehaltenen Druckgasen ein bedarfsgerechter Austausch der Gase gegeneinander ermöglicht ist.

Das Wärmedämmelement ist in besonderem Maße zum Einsatz in einem so genannten Eindeckfenster, insbesondere für ein Gewächshaus für Fassaden (transparente Wärmedämmung) oder für einen Sonnenkollektor, geeignet. Gerade bei Eindecksystemen kann nämlich eine bedarfsgerechte Anpassbarkeit der Wärmeübertragungseigenschaften von Segmenten der Außenhülle besonders wünschenswert oder vorteilhaft sein. Beim Einsatz in einem Gewächshaus ist nämlich einerseits die Aufrechterhaltung eines vergleichsweise hohen Temperaturniveaus im Inneren eines Gewächshauses wünschenswert, wobei zur Vermeidung unnötig hoher Energieaufwendungen bei vergleichsweise geringen Außentemperaturen eine hohe Wärmedämmung wünschenswert ist. Um aber bei vergleichsweise hohen Außentemperaturen ein unerwünschtes und für die im Gewächshaus kultivierten Pflanzen schädliches Überhitzen zu vermeiden, kann es in diesem Fall auch wünschenswert sein, eine vergleichsweise geringe Wärmeisolationswirkung des Wärmedämmeiements einstellen zu können. Gerade bei einer Anwendung des Wärmedämmelements zum Einsatz in einem Gewächshaus oder in einem Sonnenkollektor in der Art eines Eindeckfensters sollte das Wärmedämmelement aber auch hinsichtlich seiner Transparenzeigenschaften geeignet ausgebildet sein. Dazu könnte die Grundplatte beispielsweise als Kunststoffplatte, insbesondere aus Plexiglas, ausgeführt sein. Sie ist jedoch vorteilhafterweise als Glasplatte, vorzugsweise als Platte aus Mineralglas, ausgeführt. Die Abdeckhülle ist dann vorzugsweise auch hinsichtlich ihrer Transparenzeigenschaften geeignet an die Grundplatte angepasst, wobei die Abdeckhülle insbesondere aus einer geeignet transparenten Folie, beispielsweise einer Kunststofffolie aus PE, PU, ETFE oder Ähnlichem, ausgeführt ist.

Gerade bei einem Einsatz in einem Gewächshaus oder für einen Sonnenkollektor ist die Transparenz des Eindeckfensters insgesamt, also dessen erreichbare Lichtdurchlässigkeit, von besonderer Bedeutung. Gerade die Produktivität bei einer Pflanzenzüchtung in einem Gewächshaus hängt nämlich in entscheidendem Maße von einer ausreichenden Bereitstellung von Tageslicht ab, so dass üblicherweise eine hohe Lichtdurchlässigkeit in diesem Fall besonders gewünscht ist. Um dies in besonderem Maße zu begünstigen, ist die Grundplatte des Eindeckfensters in besonders vorteilhafter Weiterbildung für eine besonders hohe Transparenz oder Lichtdurchlässigkeit ausgestaltet. Dazu weist die als Glasplatte ausgeführte Grundplatte vorteilhafterweise eine Antireflex-Beschichtung, vorzugsweise in Form einer porösen SiO₂-Schicht, auf. Die Glasplatte des Eindeckfensters ist somit in besonders vorteilhafter Ausgestaltung in der Art eines antireflex-beschichteten Glases ausgeführt, wie es beispielsweise in der WO 02/32823 A1 oder in der nicht vorveröffentlichten deutschen Patentanmeldung Nr. 101 46 687 beschrieben ist. Die Offenbarung dieser Anmeldungen wird ausdrücklich in die vorliegende Offenbarung mit einbezogen.

Vorteilhafterweise ist die SiO₂-Schicht für eine Brechzahl im Bereich von 1,25 bis 1,40, vorzugsweise von 1,25 bis 1,38, ausgelegt. Vorzugsweise ist die Glasplatte dabei aus thermisch gehärtetem, mit einer porösen SiO₂-Schicht versehenen Sicherheitsglas ausgeführt, wobei das Sicherheitsglas insbesondere erhältlich ist durch Beschichten eines üblichen Kalk-Natron-Glases mit einer wässrigen Beschichtungslösung mit einem pH-Wert von 3 bis 8, insbesondere 5 bis 8, enthaltend 0,5 Gew% bis 5,0 Gew% [SiOₓ(OH)_{y}]ₙ-Partikeln, wobei 0<y< 4 und 0<x<2 ist, mit einer Partikelgröße von 10 nm bis 60 nm und ein Tensidgemisch, Trocknen des beschichteten Glases, thermisches Härten bei Temperaturen von mindestens 600°C für einige Minuten und thermisches Abschrecken des beschichteten Glases durch Abblasen mit Luft.

Alternativ kann die SiO₂-Schicht erhalten sein durch Abscheiden eines Hybridsols umfassend [SiOₓ(OH)_{y}]ₙ-Partikel, wobei 0<y<4 und 0<x<2 ist, die aus einem Gemisch aus einer ersten Fraktion von Partikeln mit einer mittleren Teilchengröße von 4 bis 15 nm und einer zweiten Fraktion von Partikeln mit einer mittleren Teilchengröße von 20 bis 60 nm bestehen, und umfassend Wasser und ein Lösemittel, erhältlich durch hydrolythische Polykondensation von Tetraalkoxisifanen in einem wässrigen, Lösemittel enthaltendem Medium, wobei Silizium-Hydroxid-Partikel mit einer Teilchengröße von 4 bis 15 nm erhalten werden, unter Zusatz eines monodispersen Silizium-Hydroxid-Sols mit einer mittleren Teilchengröße von 20 bis 60 nm und einer Standardabweichung von höchstens 20%.

Wie in den genannten Dokumenten beschrieben, weisen die jeweiligen antireflex-beschichteten Gläser eine besonders hohe Transmission auf, die gerade beim Einsatz in einem Gewächshaus oder in einem Sonnenkollektor eine besonders hohe Lichtausbeute ermöglicht. Bei der Verwendung in einem Gewächshaus ist aufgrund des erhöhten Lichtangebots somit ein erhöhtes Pflanzenwachstum erreichbar, was sich günstig auf den produkt-spezifischen Energiebedarf auswirkt.

Wie sich überraschenderweise aber auch herausgestellt hat, führt die Beschichtung eines Glases mit einer derartigen Schicht zu hydrophilen Eigenschaften des Glases auf der beschichteten Seite. Infolge dessen tritt bei einem derartig beschichteten Glas bei sich niederschlagender Feuchtigkeit statt einer Tropfenbildung vermehrt eine Benetzung der Glasoberfläche auf. Gerade für eine Anwendung in einem Gewächshaus ist dies besonders günstig, da bei auftretender Tropfenbildung an Dachfenstern eine unerwünschte Befeuchtung darunter liegender Pflanzen auftreten könnte. Durch die Verwendung der Eindeckfenster als Dachfenster in einem Gewächshaus ist somit bei sich niederschlagender Feuchtigkeit eine großflächige Benetzung der Fensterfläche erreichbar, so dass die sich niederschlagende Feuchtigkeit an der Fensterfläche entlang geführt und anschließend kontrolliert abgeführt werden kann. Damit wird zudem vermieden, dass die Lichttransmission infolge der Tropfenbildung durch Lichtstreuung beeinträchtigt wird. Um dies in besonders günstiger Weise auszunutzen, ist die SiO₂-Schicht in besonders vorteilhafter Ausgestaltung auf der der Abdeckhülle abgewandten Seite der Glasplatte aufgebracht. Gerade bei einer Anwendung im Gewächshaus kann dabei die Abdeckhülle zur Außenseite des Gewächshauses hin angebracht sein und somit als vorgelagerte Schutzhülle für die darunter liegende Grund- oder Glasplatte dienen. Die SiO₂-Beschichtung weist dabei vorzugsweise in den Innenraum des Gewächshauses, so dass sich dort niederschlagende Feuchtigkeit besonders zuverlässig und kontrolliert abführen lässt. Darüber hinaus kann die Glasplatte des Eindeckfensters selbstverständlich auch beidseitig mit einer derartigen SiO₂-Beschichtung versehen sein, so dass der insgesamt erreichbare Transmissionsgrad besonders hoch ist.

Vorzugsweise ist das Eindeckfenster in einem Gewächshaus eingesetzt, wobei das Gewächshaus mit einer Anzahl von Dach- oder Seitenwände bildenden Fensterelementen ausgestattet ist, von denen zumindest eines als derartiges Eindeckfenster ausgestaltet ist.

Vorteilhafterweise wird ein thermisch vorgespanntes, mit einer porösen SiO₂-Schicht versehenes Sicherheitsglas, bei dem die SiO₂-Schicht erhalten ist, durch Abscheiden eines Hybridsols, umfassend [SiOₓ(OH)_{y}]ₙ Partikel, wobei 0<y<4 und 0<x<2 ist, die aus einem Gemisch aus einer ersten Fraktion von Partikeln mit einer mittleren Teilchengröße von 4 bis 15 nm und einer zweiten Fraktion von Partikeln mit einer mittleren Teilchengröße von 20 bis 60 nm bestehen, und umfassend Wasser und ein Lösemittel, erhältlich durch hydrolythische Polykondensation von Tetraalkoxisilanen in einem wässrigen, Lösemittel enthaltendem Medium, wobei Silizium-Hydroxid-Partikel mit einer Teilchengröße von 4 bis 15 nm erhalten werden, unter Zusatz eines monodispersen Silizium-Hydroxid-Sols mit einer mittleren Teilchengröße von 20 bis 60 nm und einer Standardabweichung von höchstens 20%, in einem Fensterelement eines Gewächshauses verwendet.

Die mit der Erfindung erzielten Vorteile bestehen insbesondere darin, dass durch die gezielte Einstellung der mechanischen Eigenschaften der Grundplatte und der Abdeckhülle, insbesondere durch geeignete Wahl von deren mechanischer Flexibilität oder Biegesteifigkeit, eine vergleichsweise einfache und zuverlässige Beeinflussung der Wärmeübertragungseigenschaften des Wärmedämmelements über eine Beaufschlagung des von der Grundplatte und der Abdeckhülle begrenzten Innenvolumens mit einem geeignet gewählten Gasdruck ermöglicht ist. Insbesondere bei einer Verwendung als Eindeckfenster, wobei geeignet transparente Materialien für die Grundplatte und die Abdeckhülle gewählt sind, in einem Eindecksystem für Gebäude, wie beispielsweise Gewächshäuser oder Geräte und Einrichtungen, wie beispielsweise Solarkollektoren oder Schallschutzwände, sind dabei gleichermaßen variable Anforderungen sowohl an die Wärmedämmung als auch an die Transparenz der Eindeckfenster erfüllbar.

Gerade durch die Kombination einer vergleichsweise starren Grundplatte mit einer vergleichsweise flexiblen Abdeckhülle, insbesondere in Form einer Folie, kann dabei im Hinblick auf eine besonders günstige Einstellung der Wärmedämmungs- und Transparenzeigenschaften ein Synergieeffekt der eigentlich vorliegenden Materialeigenschaften erzielt werden. Für die pneumatische Schaltung über eine geeignete Beaufschlagung des Innenvolumens mit einem geeignet gewählten Gasdruck können zudem unterschiedliche Gase verwendet werden, die im Hinblick auf zusätzliche Funktionen ausgewählt sein können. Gerade beim Einsatz als Eindeckfenster in einem Gewächshaus kann beispielsweise als Druckgas Kohlendioxid (CO₂) zum Einsatz kommen, das zusätzlich zur ohnehin vorgesehenen Beeinflussung des Abstandes zwischen Grundplatte und Abdeckhülle eine noch weitergehende Einflussnahme auf die Wärmedämmung (u-Wert) des Gesamtsystems durch die Material- oder Transporteigenschaften des gewählten Druckgases ermöglicht.

Gerade durch die Kombination der vergleichsweise starren Grundplatte mit einer vergleichsweise flexiblen Abdeckhülle oder Folie können die zur Aufspannung der Folie erforderlichen Spannkräfte in die starre Grundplatte eingeleitet werden, so dass das Wärmedämmelement auch ohne Rückgriff auf externe Stabilisierungsmittel in der Art eines selbsttragenden Elements eine hohe intrinsische Stabilität aufweist. Durch eine geeignete Beaufschlagung mit Gasdruck kann die Wärmedämmwirkung des Wärmedämmelements gezielt geschaltet werden, wobei aktuell vorliegende Erfordernisse gesondert berücksichtigt werden können.

Im Schaltzustand "Zwischenraum geöffnet" (also vergleichsweise großes Innenvolumen unter vergleichsweise hohem Gasdruck) ist aufgrund der Isolationswirkung des Luftpolsters zwischen Abdeckhülle und Grundplatte eine vergleichsweise hohe Wärmedämmung erreichbar, wobei zusätzlich die Abdeckhülle auch eine vergleichsweise hohe mechanische Stabilität gegenüber äußeren Kräften, wie beispielsweise Windkräften, aufweist. Im Schaltzustand "Zwischenraum geschlossen", bei dem insbesondere die Abdeckhülle im Wesentlichen ganz an der Grundplatte anliegen kann, tritt hingegen eine stark verminderte Wärmedämmung auf, wobei zusätzlich aufgrund der dabei eintretenden Reduktion der optischen Reflexionsflächen eine Steigerung der Transparenz des Gesamtsystems erreichbar ist. Somit sind über die Schaltfunktion gleichermaßen die Wärmeübertragungseigenschaften und auch die optischen Eigenschaften des Eindeckfensters gemeinsam beeinflussbar. Zudem kann durch die Kombination der unterschiedlichen Materialien ein Synergieeffekt erzielt werden, wobei beispielsweise eine vergleichsweise hoch transparente Folie im Außenbereich mit einer vergleichsweise niedrigen Oberflächenspannung eine dauerhafte Verschmutzung der Außenseite sicher verhindern kann. Durch die Kombination einer sehr hoch transparenten ETFE-Folie in Verbindung mit einer antireflex-beschichteten Glasscheibe ist zudem eine besonders hohe Transparenz in Verbindung mit einer besonders hohen Wärmedämmung erreichbar. Dabei können auch eventuell erforderliche Brandschutzvorschriften ohne Einschränkungen erfüllt werden.

Durch die Bespannung der Glas- oder Grundplatte mit einer Abdeckhülle oder Abdeckfolie können zudem Beschichtungen auf der Glasplatte, die beispielsweise zur Optimierung von deren Eigenschaften aufgebracht sind, und die durch Ablagerungen auf den Oberflächen oder durch mechanische Einwirkungen beschädigt werden könnten, durch die Bespannung wirksam geschützt werden.

Durch eine geeignete Wahl der mechanischen Eigenschaften der Abdeckhülle ist zudem ein passives Schaltverhalten des Eindeckfensters erreichbar, wobei beispielsweise aufliegender Schnee zu einer Verminderung des Innenvolumens oder sogar zu einem großflächigen Kontakt der Abdeckhülle mit der darunter liegenden Grund- oder Glasplatte führen kann. Infolge dieses Kontakts erhöht sich die Wärmeleitfähigkeit des Gesamtsystems derart, dass durch die im Innenraum des Gewächshauses erfolgende Beheizung ein Abschmelzen des aufliegenden Schnees in der Art eines selbsttätigen oder selbstreinigenden Systems erreicht werden kann.

Die Glas- oder Grundplatte kann insbesondere auch als gehärtetes Glas (ESG-Glas) ausgeführt sein. In Verbindung mit der Abdeckhülle sind vorteilhafterweise noch mit einer weiteren, auf der jeweils anderen Seite der Glasplatte angeordneten Abdeckhülle kann die jeweilige Abdeckhülle als Schutzfolie dienen, die bei einem Zerbersten der Glasplatte das Herabfallen von Scherben oder Trümmern zuverlässig verhindert. Derartig ausgestaltete Elemente auf ESG-Glas-Basis sind somit auch im Bereich erhöhter Sicherheitsanforderungen wie beispielsweise an öffentlichen Gebäuden ohne weiteren Aufwand einsetzbar.

Das Wärmedämmelement ist besonders geeignet für eine Anwendung in Solarkollektoren oder in Gewächshäusern, insbesondere in Form der Eindeckfenster. Das Wärmedämmelement ist aber auch besonders vorteilhaft einsetzbar bei Fassadeneindeckung und/oder bei Schallschutzwänden.

Ein Ausführungsbeispiel der Erfindung wird anhand einer Zeichnung näher erläutert. Das Wärmedämmelement ist dabei anhand einer Verwendung als Eindeckfenster in einem Gewächshaus erörtert. Selbstverständlich kann das Wärmedämmelement aber auch in anderen technischen Einrichtungen, beispielsweise in Sonnenkollektoren, zum Einsatz kommen. Es zeigen:
- Fig. 1: schematisch ein Gewächshaus mit einer Anzahl von Fensterelementen,
- Fig. 2-7: jeweils ein Eindeckfenster im Querschnitt, und
- Fig. 8: die Grundplatte eines Eindeckfensters nach einer der Fig. 2-7 im Querschnitt.

Gleiche Teile sind in allen Figuren mit denselben Bezugszeichen versehen.

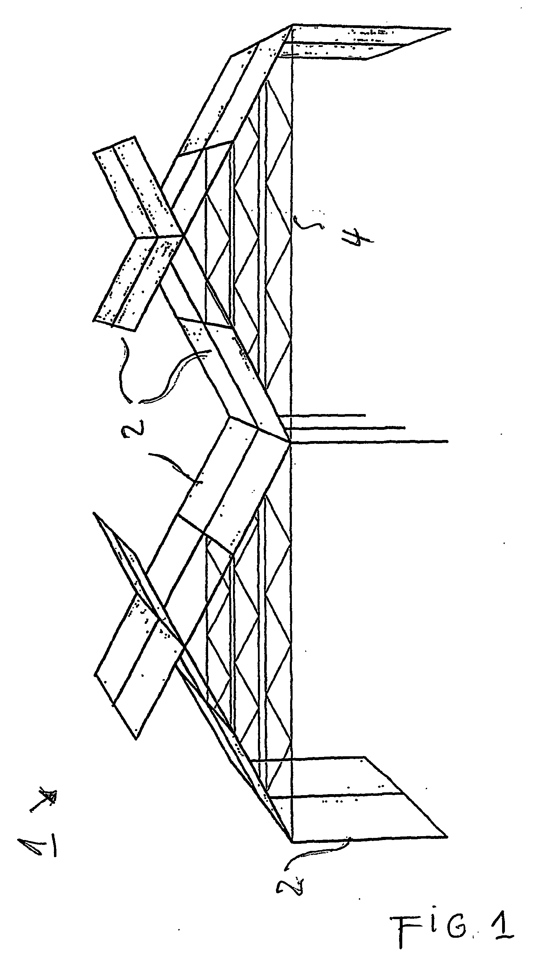

Das Gewächshaus 1 nach Fig. 1 umfasst eine Anzahl von Dach- oder Seitenwände bildenden Fensterelementen 2, die in ihrer Gesamtheit die Außenrand des Gewächshauses 1 bilden, und die je nach Einsatzzweck feststehend oder klappbar ausgebildet sein können. Die Fensterelemente 2 sind zur mechanischen Stabilisierung von einem Gerüstrahmen 4 gehalten; alternativ können die Fensterelemente 2 aber auch in der Art einer selbsttragenden Ausführung unter Verzicht auf einen eigenständigen Rohrrahmen ausgeführt sein.

Hinsichtlich der die Hüll- oder Außenfläche des Gewächshauses 1 bildenden Fensterelemente 2 können, ebenso wie bei einem entsprechenden Einsatz an anderen Gebäuden oder in technischen Geräten wie beispielsweise Sonnenkollektoren, unterschiedliche Anforderungen an die Wärmedämmung und/oder die Transparenz der jeweiligen Bauteile auftreten. Beispielsweise kann je nach Tages- und Jahreszeit eine Variation dieser Anforderungen auftreten. Im Übrigen wird gerade von Eindeckmaterialien für Gewächshäuser und Solarkollektoren meist eine möglichst hohe Transparenz und auch eine möglichst hohe Wärmedämmung erwartet. Beide Anforderungen stehen jedoch grundsätzlich in Konkurrenz zueinander, da eine hohe Wärmedämmung üblicherweise zu einer verminderten Transparenz führt.

Bei Gewächshäusern ist jedoch eine hohe Wärmedämmung üblicherweise nur bei Nacht und bei tiefen Außentemperaturen am Tag vorteilhaft. Bei schwacher solarer Einstrahlung in den Morgen- und Abendstunden ist hingegen eine vergleichsweise hohe Transparenz gefordert, wobei die Wärmedämmung eine eher untergeordnete Rolle spielt. In dem Fall, dass Schnee auf dem Gewächshausdach zu liegen kommt (oder auch bei Schnee auf Sonnenkollektoren) ist ein möglichst schnelles Abtauen wünschenswert. Dies kann bei geeigneter Beheizung des Innenraums des Gewächshauses 1 erreicht werden, indem die Fensterelemente 2 gerade eine vergleichsweise geringe Wärmedämmung aufweisen.

Um diesen wechselnden Anforderungen gerecht werden zu können, sind die Fensterelemente 2 des Gewächshauses 1 als Eindeckfenster ausgestaltet, die jeweils als Wärmedämmelement 6 mit extern einstellbarem Wärmeübertragungskoeffizient ausgeführt sind.

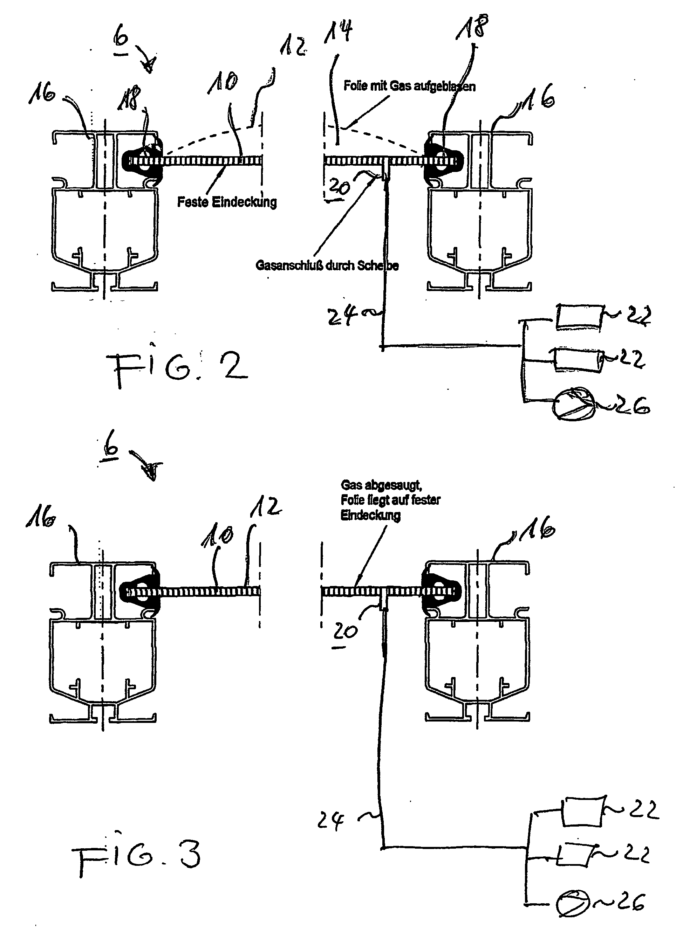

Dazu weist das das jeweilige Eindeckfenster bildende Wärmedämmelement 6, wie in den Fig. 2 bis 7 dargestellt, jeweils eine vergleichsweise starre Grundplatte 10 auf, die mit einer zugeordneten Abdeckhülle 12 überspannt ist. Hinsichtlich der Materialwahl für die Grundplatte 10 und die Abdeckhülle 12 ist dabei im Ausführungsbeispiel berücksichtigt, dass eine Anwendung als Eindeckfenster vorgesehen ist. Die Grundplatte 10 und die Abdeckhülle 12 sind somit hinsichtlich einer geeignet hohen Transparenz geeignet gewählt. Bei einem Einsatz ohne Erfordernis einer derartigen optischen Transparenz können aber auch andere Materialien zum Einsatz kommen.

Für eine bedarfsgerechte Anpassung an variierende Erfordernisse ist das Wärmedämmelement 6 für eine gezielte Beeinflussung der Wärmeübertragungseigenschaften ausgelegt. Um dies zu ermöglichen, ist die Abdeckhülle 12 hinsichtlich ihrer mechanischen Flexibilität derart ausgewählt, dass das von der Grundplatte 10 und der Abdeckhülle 12 begrenzte, mit einem Gasdruck beaufschlagbare Innenvolumen 14 durch den Gasdruck veränderbar ist. Die Grundplatte 10 ist dabei hinreichend starr gewählt, so dass sie in der Art einer selbsttragenden Konstruktion sämtliche auftretenden Spannkräfte aufnehmen kann. Im Gegensatz zur Grundplatte 10 ist die Abdeckhülle 12 jedoch vergleichsweise flexibel oder mit entsprechend anders gewählter Biegesteifigkeit, insbesondere als Deckfolie ausgewählt, so dass bei sich änderndem Gasdruck im Innenvolumen 14 eine entsprechende Verformung der Abdeckhülle 12 und damit eine entsprechende Veränderung des Innenvolumens 14 und eine entsprechende Veränderung des lokalen Abstands der Abdeckhülle 12 von der Grundplatte 10 erreichbar ist. Um dies zu verdeutlichen, ist eine Ausführungsform des als Eindeckfenster vorgesehenen Wärmedämmelements 6 in den Fig. 2 und 3 in zwei verschiedenen Betriebszuständen gezeigt.

Im Betriebszustand nach Fig. 2 ist das Wärmedämmelement 6 für eine vergleichsweise hohe Wärmeisolierung angesteuert. Dazu ist das Innenvolumen 14 mit vergleichsweise hohem Gasdruck beaufschlagt, so dass sich aufgrund der vergleichsweise flexiblen mechanischen Eigenschaften der Abdeckhülle 12 ein vergleichsweise großes Innenvolumen 14 und somit ein vergleichsweise großer durchschnittlicher Abstand der Abdeckhülle 12 von der Grundplatte 10 einstellt. Das Innenvolumen 14 trägt in diesem Zustand vergleichsweise viel zu einer Wärmeisolationswirkung bei, so dass eine hohe Wärmedämmung gewährleistet ist. Wie der Darstellung nach Fig. 2 im Übrigen entnehmbar ist, sind die Grundplatte 10 und die Abdeckhülle 12 in einem gemeinsamen Halterahmen 16 gehaltert, innerhalb dessen sie in einem Randbereich 18 gasdicht miteinander verschweißt sind.

Im anderen Betriebszustand - wie in Fig. 3 gezeigt - ist der Innenraum 14 vollständig entlüftet oder sogar mit Unterdruck beaufschlagt. Dadurch liegt in diesem Betriebszustand die vergleichsweise flexible Abdeckhülle 12 nahezu vollständig und flächig an der Grundplatte 10 an, so dass das Innenvolumen 14 im Wesentlichen vollständig verschwindet. Das Innenvolumen 14 trägt in diesem Betriebszustand somit nichts zur Wärmeisolierung bei, so dass das Wärmedämmelement 6 in diesem Betriebszustand nur vergleichsweise geringe Wärmedämmung aufweist.

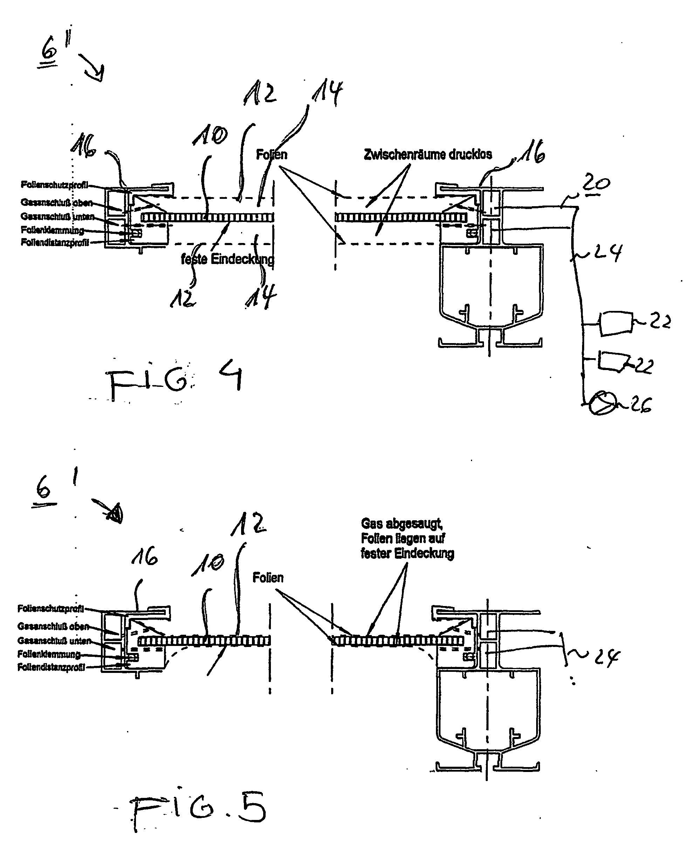

Im Ausführungsbeispiel nach den Fig. 4 und 5 ist eine alternative Ausführungsform des Wärmedämmelements 6' ebenfalls in zwei Betriebszuständen gezeigt. In dieser Ausführungsform umfasst das Wärmedämmelement 6' die vergleichsweise starre Grundplatte 10 und beidseitig jeweils eine darüber gespannte Abdeckhülle 12, die in dieser Ausführungsform jeweils als Deckfolie ausgestaltet ist. In dieser Ausführungsform sind die Grundplatte 10 und die Abdeckhüllen 12 ebenfalls in einem gemeinsamen umlaufenden Halterahmen 16 angeordnet, wobei in diesem Fall die Grundplatte 10 und die Abdeckhüllen 12 jedoch nicht in ihren Randbereichen unmittelbar miteinander verschweißt sind. Vielmehr ist in diese Ausführungsform eine gasdichte Verbindung zwischen den Abdeckhüllen 12 und der Grundplatte 10 durch Vermittlung über den Halterahmen 16 hergestellt, wobei die Abdeckhüllen 12 in den Halterahmen 16 mechanisch eingespannt sind. Dadurch stellt sich im drucklosen Zustand eine annähernd gleichbleibende Beabstandung der Abdeckhüllen 12 von der Grundplatte 10 ein, wie dies in Fig. 4 gezeigt ist. In diesem Zustand tragen somit die Innenvolumina 14 zwischen den Abdeckhüllen 12 und der Grundplatte 10 zur Wärmeisolierung bei.

Um eine Umschaltung zu einem Betriebszustand mit geringerer Wärmeisolierung zu ermöglichen, kann bei dieser Ausführungsform das jeweilige Innenvolumen 14 durch Beaufschlagung mit einem Unterdruck verringert werden, bis im Extremfall infolge des aufgebrachten Unterdrucks die Abdeckhüllen 12 infolge ihrer vergleichsweise hohen mechanischen Flexibilität nahezu vollständig an der Grundplatte 10 anliegen. In diesem Betriebszustand tragen die Innenvolumina 14 somit ebenfalls nicht mehr zur Wärmeisolierung bei, so dass eine deutlich geringere Wärmedämmungswirkung erreichbar ist.

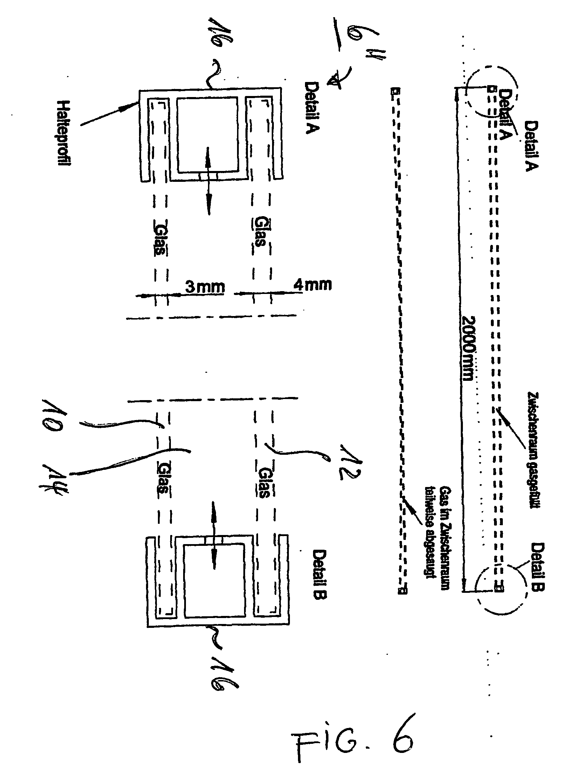

In Fig. 6 ist eine weitere alternative Ausführungsform für ein Wärmedämmelement 6" gezeigt, bei der im Gegensatz zu den bisherigen Ausführungsformen zusätzlich zu der Grundplatte 10 eine in ihren mechanischen Eigenschaften zu dieser annähernd vergleichbare Abdeckhülle 12 vorgesehen ist. In diesem Ausführungsbeispiel sind sowohl die Grundplatte 10 als auch die Abdeckhülle 12 jeweils als flächige Glasplatte ausgeführt. In dieser Ausführungsform sind die Grundplatte 10 und die Abdeckhülle 12 hinsichtlich ihrer Dimensionierung, insbesondere hinsichtlich ihrer Dicke, im Hinblick auf ihre laterale Ausdehnung derart gewählt, dass eine ausreichende Verformbarkeit in Reaktion auf eine Variation des Gasdrucks im Innenvolumen 14 gewährleistet ist. Die Grundplatte 10 und die Abdeckhülle 12 sind in dieser Ausführungsform ebenfalls in einem gemeinsamen Halterahmen 16 gehaltert.

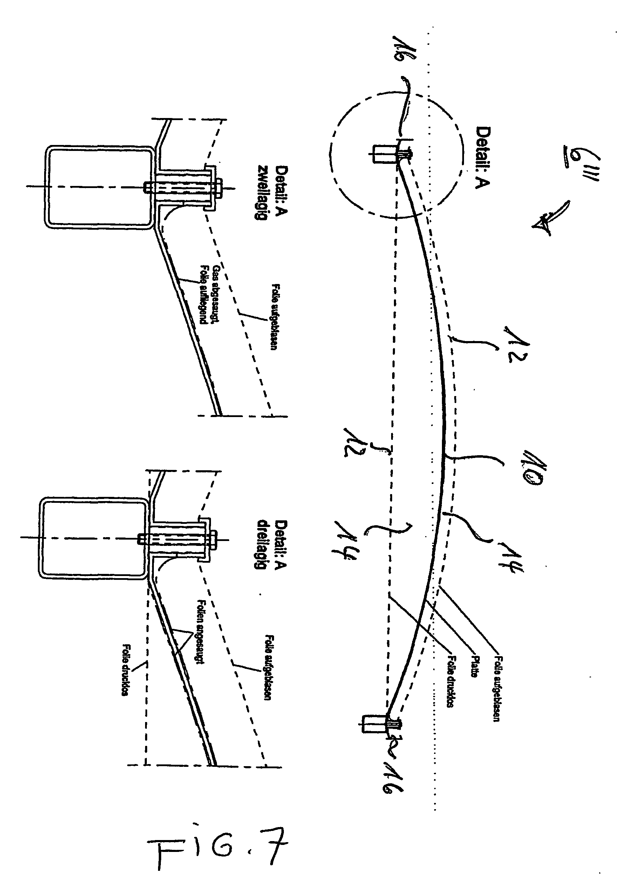

Je nach vorgesehenem Einsatzzweck kann das als Eindeckfenster vorgesehene Wärmedämmelement 6,6',6" im Wesentlichen planar oder auch gekrümmt, insbesondere sphärisch gekrümmt, ausgeführt sein. Ein Ausführungsbeispiel hierzu ist in Fig. 7 dar gestellt. Bei dieser Ausführungsform des Wärmedämmelements 6"' ist die Grundplatte 10 sphärisch gekrümmt ausgeführt. Auf ihrer gemäß der Darstellung nach Fig. 7 oberen Seite ist die Grundplatte 10 von einer im Ausführungsbeispiel als vergleichsweise flexible Folie ausgebildeten Abdeckhülle 12 überspannt, die mit der Grundplatte 10 in einem gemeinsamen Halterahmen 16 gehaltert ist. Die Einhaltung eines ausreichenden Abstands zwischen der Abdeckhülle 12 und der Grundplatte 10 - wie in der Fig. 7 gezeigt - erfolgt in diesem Betriebszustand durch eine geeignete Beaufschlagung des Innenvolumens 14 mit ausreichend hohem Gasdruck. Zusätzlich ist die Grundplatte 10 auf ihrer im Ausführungsbeispiel gesehenen unteren Seite von einer weiteren Abdeckhülle 12 überspannt, die aufgrund ihrer seitlichen Verspannung im Halterahmen 16 im im Ausführungsbeispiel gezeigten drucklosen Zustand annähernd planar verläuft. Auch bei dieser Ausführungsform können beide Abdeckhüllen 12 in ihrer relativen Positionierung zur Grundplatte 10 durch eine geeignete Veränderung des Gasdrucks im ihnen zugeordneten Innenvolumen 14 bedarfsgerecht variiert werden.

Zur geeigneten Variation des Gasdrucks in den Innenvolumina 14 ist dieses in sämtlichen vorgenannten Ausführungsformen über ein Gasleitungssystem 20, das insbesondere durch die Grundplatte 10 hindurch geführt sein kann, mit einer Anzahl von Druckgasspeichem 22 verbunden. Die Druckgasspeicher 22 sind dazu an eine absperrbare Gasleitung 24 des Gasleitungssystems 20 angeschlossen, an die zudem auch noch eine Unterdruckpumpe 26 angeschlossen ist. In den Druckgasspeichem 22 sind dabei verschiedenartige Druckgase vorgehalten, mit denen das jeweilige Innenvolumen 14 bedarfsweise beaufschlagt werden kann. Die Druckgase sind dabei insbesondere hinsichtlich weiterer Eigenschaften, wie beispielsweise ihrem Einfluss auf optische Eigenschaften oder ihre Wärmeleitfähigkeiten, ausgewählt. Als Druckgas ist beispielsweise Kohlendioxid vorgehalten, das bedarfsweise in das jeweilige Innenvolumen 14 eingespeist werden kann, um die Wämeleitfähigkeit des als Eindeckfenster vorgesehenen jeweiligen Wärmedämmelements 6,6',6",6"' vorübergehend zu verändern.

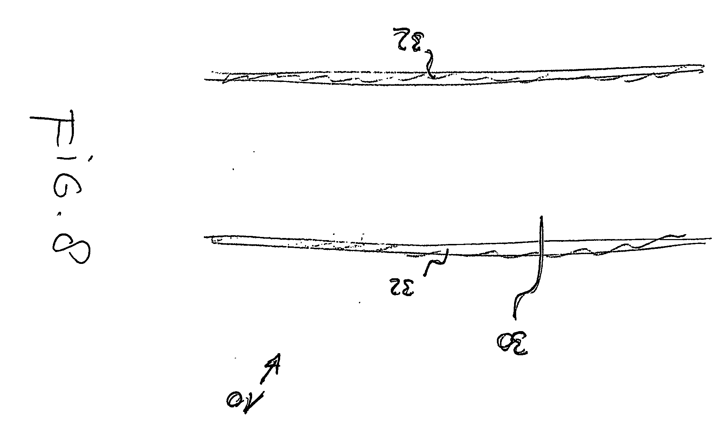

Im Hinblick auf den vorgesehenen Einsatz in einem Gewächshaus ist das Wärmedämmelement 6,6',6",6"' für eine insgesamt besonders hohe Transparenz ausgelegt, die eine besonders hohe Tageslichtausbeute im Inneren des Gewächshauses 1 und somit einen besonders geringen produkt-spezifischen Energiebedarf bei der Pflanzenkultivierung ermöglicht. Dazu ist die Grundplatte 10 des Wärmedämmelements 6,6',6",6"' als antireflex-beschichtete Glasplatte ausgeführt, wie dies im Ausschnitt in Fig. 8 dargestellt ist. Die Grundplatte 10 ist dabei auf der Grundlage einer üblichen Kalk-Natron-Glasplatte 30 aufgebaut, die beidseitig mit einer porösen SiO₂-Schicht versehen ist. Die Grundplatte 10 ist dabei als thermisch gehärtetes Sicherheitsglas ausgeführt. Die SiO₂-Schichten 32 weisen zur Einstellung einer besonders hohen Transparenz eine Brechzahl von etwa 1,25 auf. Zur Herstellung eines derartig beschichteten Sicherheitsglases wird auf die WO 02/32823 A1 und auf die nicht vorveröffentlichte deutsche Patentanmeldung Nr. 101 46 687 verwiesen, deren Offenbarungsgehalte ausdrücklich mit einbezogen werden.

### Bezugszeichenliste

- 1: Gewächshaus
- 2: Fensterelement
- 4: Gerüstrahmen
- 6,6',6",6"': Wärmedämmelement
- 10: Grundplatte
- 12: Abdeckhülle
- 14: Innenvolumen
- 16: Halterahmen
- 20: Gasleitungssystem
- 22: Druckgasspeicher
- 24: Gasleitung
- 26: Unterdruckpumpe
- 30: Kalk-Natron-Glasplatte
- 32: SiO₂-Schicht

## Patentansprüche

1. Eindeckfenster, insbesondere für ein Gewächshaus (1) oder für einen Sonnenkollektor, mit einer als Glasplatte ausgeführten Grundplatte (10), die mit einer Abdeckhülle (12) überspannt ist, wobei die Abdeckhülle (12) hinsichtlich ihrer mechanischen Flexibilität derart ausgewählt ist, dass das von der Grundplatte (10) und der Abdeckhülle (12) begrenzte, mit einem Gasdruck beaufschlagbare Innenvolumen (14) über den Gasdruck veränderbar ist, **dadurch gekennzeichnet, dass** das Innenvolumen (14) zur Variation des Gasdrucks über eine absperrbare Gasleitung (24) mit einer Anzahl von Druckgasspeichern (22) verbunden ist.

2. Eindeckfenster nach Anspruch 1, dessen Grundplatte (10) als Platte aus Mineralglas ausgeführt ist.

3. Eindeckfenster nach Anspruch 1 oder 2, dessen Glasplatte mit einer Antireflex-Beschichtung versehen ist.

4. Eindeckfenster nach einem der Ansprüche 1 bis 3, dessen Glasplatte aus mit einer porösen SiO₂-Schicht (32) versehenem Sicherheitsglas ausgeführt ist.

5. Eindeckfenster nach Anspruch 4, bei dem die SiO₂-Schicht (32) eine Brechzahl im Bereich von 1,25 bis 1,40, vorzugsweise 1,25 bis 1,38, aufweist.

6. Eindeckfenster nach einem der Ansprüche 1 bis 5, dessen Glasplatte thermisch gehärtet ist.

7. Eindeckfenster nach Anspruch 6, bei dem das Sicherheitsglas erhalten ist durch Beschichten eines üblichen Kalk-Natron-Glases (30) mit einer wässrigen Beschichtungslösung mit einem pH-Wert von 3 bis 8, insbesondere 5 bis 8, enthaltend 0,5 Gew.-% bis 5,0 Gew.-% [SiOₓ(OH)_{y}]ₙ-Partikeln, wobei 0<y<4 und 0<x<2 ist, mit einer Partikelgröße von 10 nm bis 60 nm und ein Tensidgemisch, Trocknen des beschichteten Glases, thermisches Härten bei Temperaturen von mindestens 600 °C für einige Minuten und thermisches Abschrecken des beschichteten Glases durch Abblasen mit Luft.

8. Eindeckfenster nach Anspruch 6 oder 2, bei dem die SiO₂-Schicht (32) erhalten ist durch Abscheiden eines Hybridsols, umfassend [SiOₓ(OH)_{y}]ₙ-Partikel, wobei 0<y<4 und 0<x<2 ist, die aus einem Gemisch aus einer ersten Fraktion von Partikeln mit einer mittleren Teilchengröße von 4 bis 15 nm und einer zweiten Fraktion von Partikeln mit einer mittleren Teilchengröße von 20 bis 60 nm bestehen, und umfassend Wasser und ein Lösemittel, erhältlich durch hydrolytische Polykondensation von Tetraalkoxysilanen in einem wäßrigen, Lösemittel enthaltendem Medium, wobei Silizium-Hydroxid-Partikel mit einer Teilchengröße von 4 bis 15 nm erhalten werden, unter Zusatz eines monodispersen Silizium-Hydroxid-Sols mit einer mittleren Teilchengröße von 20 bis 60 nm und einer Standardabweichung von höchstens 20 %.

9. Eindeckfenster nach einem der Ansprüche 4 bis 8, bei dem die SiO₂-Schicht (32) auf der der Abdeckhülle (12) abgewandten Seite der Glasplatte aufgebracht ist.

10. Eindeckfenster nach einem der Ansprüche 1 bis 9, dessen Grundplatte (10) und Abdeckhülle (12) in einem gemeinsamen Halterahmen (16) gehaltert sind, über den oder in dem sie gasdicht miteinander verbunden sind.

11. Eindeckfenster nach einem der Ansprüche 1 bis 10, bei dem als Abdeckhülle (12) eine Deckfolie vorgesehen ist.

12. Eindeckfenster nach Anspruch 11, dessen Grundplatte (10) derart dimensioniert ist, dass sie die Spannkräfte der darüber gespannten Deckfolie aufnimmt.

13. Eindeckfenster nach einemm der Ansprüche 1 bis 12, bei dem in den Druckgasspeichern (22) unterschiedliche Druckgase vorgehalten sind.

14. Eindeckfenster nach einem der Ansprüche 1 bis 13, dessen Innenvolumen (14) an eine absperrbare Entlüftungsleitung angeschlossen ist.

15. Eindeckfenster nach einem der Ansprüche 1 bis 14, dessen Innenvolumen (14) über eine absperrbare Absaugleitung mit einem Unterdrucksystem verbunden ist.

16. Eindeckfenster nach einem der Ansprüche 1 bis 15, dessen Grundplatte (10) beidseitig mit jeweils einer Abdeckhülle (12), vorzugsweise einer Deckfolie, überspannt ist.

17. Verwendung eines Eindeckfensters nach einem der Ansprüche 1 bis 15 als Fensterelement (2) eines Gewächshauses (1) oder in einem Sonnenkollektor.

## Claims

1. A covering window, in particular for a greenhouse (1) or for a solar collector,
having a base plate (10) executed as a glass plate, over which a covering wrap (12) is stretched, the mechanical flexibility of said covering wrap (12) being selected such that the inner volume (14), which is defined by the base plate (10) and the covering wrap (12) and which can be subjected to a gas pressure, can be changed by means of the gas pressure, **characterized in that** the inner volume (14) is connected via a lockable gas line (24) with a number of compressed-gas accumulators (22), for varying the gas pressure.

2. The covering window of claim 1, whose base plate (10) is executed as a plate made of mineral glass.

3. The covering window of claim 1 or 2, whose glass plate is provided with an anti-reflective coating.

4. The covering window of any of claims 1 to 3, whose glass plate is made of safety glass coated with a porous SiO₂ layer (32).

5. The covering window of claim 4, wherein the SiO₂ layer (32) has a refractive index in the range from 1.25 to 1.40, preferably from 1.25 to 1.38.

6. The covering window of any of claims 1 to 5, whose glass plate is thermally hardened.

7. The covering window of claim 6, wherein the safety glass is obtained by coating a common soda-lime glass (30) with an aqueous coating solution with a pH value of 3 to 8, in particular of 5 to 8, containing 0.5 % in weight to 5.0 % in weight of [SiOₓ(OH)_{y}]ₙ particles, with 0<y<4 and 0<x<2. with a particle size of 10 nm to 60 nm, and a tenside mixture, drying the coated glass, thermal hardening at temperatures of at least 600°C for some minutes, and thermal quenching of the coated glass by blowing it off with air.

8. The covering window of claim 6 or 2, wherein the SiO₂ layer (32) is obtained by precipitating a hybrid sol comprising [SiOₓ(OH)_{y}]ₙ particles, with 0<y<4 and 0<x<2, consisting of a mixture of a first fraction of particles with a mean particle size of 4 to 15 nm and a second fraction of particles with a mean particle size of 20 to 60 nm, and comprising water and a solvent obtainable by hydrolytic polycondensation of tetra-alcoxysilanes in an aqueous medium containing solvent, whereby silicon hydroxid particles with a particle size of 4 to 15 nm are obtained, with addition of a monodisperse silicon hydroxid sol with a mean particle size of 20 to 60 nm and a standard deviation of maximally 20 %.

9. The covering window of any of claims 4 to 8, wherein the SiO₂ layer (32) is applied on that side of the glass plate which is facing away from the covering wrap (12).

10. The covering window of any of claims 1 to 9, whose base plate (10) and covering wrap (12) are supported in a common holding frame (16) by which, or in which, they are connected with each other in a gastight manner.

11. The covering window of any of claims 1 to 10, wherein a cover foil is provided as covering wrap (12).

12. The covering window of claim 11, whose base plate (10) is dimensioned such that it absorbs the elastic forces of the cover foil stretched over it.

13. The covering window of any of claims1 to 12, wherein different compressed gases are stored in the compressed-gas accumulators (22).

14. The covering window of any of claims 1 to 13, whose inner volume (14) is connected to a lockable ventilation line.

15. The covering window of any of claims1 to 14, whose inner volume (14) is connected, via a lockable extraction line, with an underpressure system.

16. The covering window of any of claims 1 to 15, over each of the two sides of whose base plate (10) a covering wrap (12), preferably a cover foil, is stretched.

17. Use of a covering window of any of claims 1 to 15 as a window element (2) of a greenhouse (1) or in a solar collector.

## Revendications

1. Fenêtre de couverture, en particulier pour une serre (1) ou pour un collecteur solaire, ayant une plaque de base (10) exécutée comme une plaque de verre, qui est recouverte par une gaine de couverture (12), la flexibilité mécanique de dite gaine de couverture (12) étant choisie de telle manière que le volume intérieur (14), qui est limité par la plaque de base (10) et la gaine de couverture (12) et qui peut être soumis à une pression de gaz, peut être changé au moyen de la pression de gaz, **caractérisée en ce que** le volume intérieur (14) est relié, par une conduite de gaz (24) fermable, avec un nombre d'accumulateurs de gaz comprimé (22), pour varier la pression du gaz.

2. Fenêtre de couverture d'après la revendication 1, dont la plaque de base (10) est exécutée comme une plaque de verre minéral.

3. Fenêtre de couverture d'après la revendication 1 ou 2, dont la plaque de verre est munie d'une couche antireflets.

4. Fenêtre de couverture d'après l'une quelconque des revendications 1 à 3, dont la plaque de verre est fait de verre de sécurité revêtu d'une couche de SiO₂ (32) poreuse.

5. Fenêtre de couverture d'après la revendication 4, dans laquelle la couche de SiO₂ (32) a un indice de réfraction dans la gamme de 1,25 jusqu'à 1,40, de préférence, de 1,25 jusqu'à 1,38.

6. Fenêtre de couverture d'après l'une quelconque des revendications 1 à 5, dont la plaque de verre est durcie thermiquement.

7. Fenêtre de couverture d'après la revendication 6, dans laquelle le verre de sécurité est obtenu en revêtant un verre sodé calcique (30) courant d'une solution de revêtement aqueuse avec une valeur pH de 3 à 8, en particulier de 5 à 8, contenant 0,5 % en poids à 5,0 % en poids de particules de [SiOₓ(OH)_{y}]ₙ, avec 0<y<4 et 0<x<2, avec une grandeur de particule de 10 nm à 60 nm, et un mélange de tensides, en séchant le verre revêtu, en le durcissant thermiquement à des températures d'au moins 600°C pendant quelques minutes, et en trempant le verre revêtu thermiquement en le soufflant d'air.

8. Fenêtre de couverture d'après la revendication 6 ou 2, dans laquelle la couche de SiO₂ (32) est obtenue par précipitation d'un sol hybride comprenant des particules de [SiOₓ(OH)_{y}]ₙ, avec 0<y<4 et 0<x<2, se composant d'un mélange d'une première fraction de particules avec une grandeur moyenne de particule de 4 à 15 nm et d'une seconde fraction de particules avec une grandeur moyenne de particule de 20 à 60 nm, et comprenant de l'eau et un solvant obtenable par polycondensation hydrolytique de tétra-alcoxysilanes dans un milieu aqueux contenant du solvant, ce par quoi on obtient des particules de hydroxyde de silicium avec une grandeur de particule de 4 à 15 nm, avec addition d'un sol d'hydroxyde de silicium monodisperse avec une grandeur moyenne de particule de 20 à 60 nm et une déviation standard de 20 % au maximum.

9. Fenêtre de couverture d'après l'une quelconque des revendications 4 à 8, dans laquelle la couche de SiO₂ (32) est appliquée sur le côté de la plaque de verre qui est détourné de la gaine de couverture (12).

10. Fenêtre de couverture d'après l'une quelconque des revendications 1 à 9, dont la plaque de base (10) et la gaine de couverture (12) sont tenues dans un cadre de support (16) commun par lequel, ou dans lequel, elles sont reliées l'une avec l'autre d'une manière étanche au gaz.

11. Fenêtre de couverture d'après l'une quelconque des revendications 1 à 10, dans laquelle une feuille de couverture est prévue comme gaine de couverture (12).

12. Fenêtre de couverture d'après la revendication 11, dont la plaque de base (10) est dimensionnée de façon qu'elle absorbe les forces élastiques de la feuille de couverture qui la recouvre.

13. Fenêtre de couverture d'après l'une quelconque des revendications 1 à 12, dans laquelle de différents gaz comprimés sont stockés dans les accumulateurs de gaz comprimé (22).

14. Fenêtre de couverture d'après l'une quelconque des revendications 1 à 13, dont le volume intérieur (14) est relié avec une conduite de ventilation fermable.

15. Fenêtre de couverture d'après l'une quelconque des revendications 1 à 14, dont le volume intérieur (14) est relié, au moyen d'une conduite d'aspiration fermable, avec un système à dépression.

16. Fenêtre de couverture d'après l'une quelconque des revendications 1 à 15, dont la plaque de base (10) est recouverte des deux côtés d'une gaine de couverture (12), de préférence, d'une feuille de couverture.

17. Utilisation d'une fenêtre de couverture d'après l'une quelconque des revendications 1 à 15 comme élément de fenêtre (2) d'une serre (1) ou dans un collecteur solaire.
